# EUROPÄISCHE PATENTSCHRIFT

(11) **EP 4 028 312 B1**
(45) Veröffentlichungstag und Bekanntmachung des Hinweises auf die Patenterteilung: **30.10.2024**
(21) Anmeldenummer: 20768583.5
(22) Anmeldetag: 08.09.2020
(51) Int. Cl.: B62D 53/08

(54) **SATTELKUPPLUNG, VERFAHREN ZUR BESTIMMUNG EINES BELASTUNGSZUSTANDS UND/ODER EINES VERSCHLEISSZUSTANDS EINER SATTELKUPPLUNG UND VERFAHREN ZUM AUFRÜSTEN EINER SATTELKUPPLUNG**
FIFTH-WHEEL COUPLING, METHOD FOR DETERMINING A LOAD STATE AND/OR WEAR STATE OF A FIFTH-WHEEL COUPLING AND METHOD FOR UPGRADING A FIFTH-WHEEL COUPLING
SELLETTE D'ATTELAGE, PROCÉDÉ DE DÉTERMINATION D'UN ÉTAT DE CHARGE ET/OU D'UN ÉTAT D'USURE D'UNE SELLETTE D'ATTELAGE ET PROCÉDÉ D'AMÉLIORATION D'UNE SELLETTE D'ATTELAGE

(30) Priorität: 10.09.2019 DE 102019124273
(43) Veröffentlichungstag der Anmeldung: 20.07.2022
(73) Patentinhaber: SAF-HOLLAND GmbH, 63856 Bessenbach (DE)
(72) Erfinder: DIETER, Daniel Dominik, 64347 Griesheim (DE); HAßLER, Dominik, 80335 München (DE); KÖBSCHALL, Kilian, 55129 Mainz (DE); POSS, Björn, 55452 Windesheim (DE); SCHOLL, Patrick, 69434 Hirschhorn (DE); VORWERK-HANDING, Gunnar, 64293 Darmstadt (DE); KÖSTER, Mario Sebastian, 78351 Bodman-Ludwigshafen (DE)
(74) Vertreter: Müller Schupfner & Partner Patent- und Rechtsanwaltspartnerschaft mbB (Muc)
(86) Internationale Anmeldenummer: PCT/EP2020/075062
(87) Internationale Veröffentlichungsnummer: WO 2021/048119

(56) Entgegenhaltungen:
- WO-A1-2006/029732
- WO-A1-2006/103480
- CN-A- 106 114 658
- DE-B4- 102006 057 327
- US-A1- 2002 024 430
- US-B1- 6 302 424

## Beschreibung

Die vorliegende Erfindung betrifft eine Sattelkupplung, ein Verfahren zur Bestimmung eines Belastungszustands und/oder eines Verschleißzustands einer Sattelkupplung und ein Verfahren zum Aufrüsten einer Sattelkupplung.

Sattelkupplungen sind aus dem Stand der Technik hinlänglich bekannt. Sie dienen in der Regel der Anbindung, insbesondere der reversiblen Anbindung, eines Anhängers, insbesondere eines Sattelanhängers, an eine Zugmaschine zur Ausbildung eines Sattelzugs. Insbesondere betrifft die vorliegende Erfindung die Bestimmung von Lastkollektiven bzw. angreifenden Kraftmomenten und Kräften, die auf die Sattelkupplung, insbesondere im gekoppelten Zustand, wirken.

Hierzu ist es aus dem Stand der Technik bekannt, Kräfte zu messen, die zwischen einem Königszapfen des Anhängers und einer Kupplungsplatte der Sattelkupplung wirken. Beispielsweise ist das Anbringen eines Kraftsensors im Königszapfen beschrieben worden. Allerdings lässt sich hier nur ein Teil des Kraftflusses messen, da eine Kraftübertragung typischerweise zusätzlich über Reibkräfte zwischen dem Auflieger und der Kupplungsplatte erfolgt.

Aus der DE 10 2006 057 327 B4 ist eine Messung von Kräften zwischen einer Montageplatte bzw. Montagefläche der Zugmaschine und einer Sattelkupplung mittels Messelementen bekannt, die zwischen der Montagefläche und der Sattelkupplung angeordnet sind. Allerdings existiert eine Vielzahl verschiedener Varianten an Montageplatten bzw. Montagefläche, sodass für jede eine unterschiedliche Lösung konstruiert werden müsste. Zudem ist an dieser Stelle zwischen Sattelkupplung und Montageplatte der Einfluss des Fahrzeugrahmens vergleichsweise hoch, sodass eine entsprechende Verformung des Fahrzeugrahmens zu einer Beeinflussung der gemessenen Kräfte führen kann.

Die US 6 302 424 B1 beschreibt eine Kraftmessung an den Lagern der Kupplungsplatte. Allerdings bleibt hier unberücksichtigt, dass sich der Kraftfluss zwischen einem Lagereinsatz und einem Dämpfungselement aufteilt. Entsprechend müsste ein Verhältnis der Aufteilung in diese beiden Kraftpfade mitbestimmt werden, was allerdings aufgrund von Alterung und Verschleiß des Lagereinesatzes bzw. des Dämpfungselements nicht möglich ist.

Die US 2002/024430 A1 zeigt ein elektronisches System, das einen Anhängersensor, einen Verschlusssensor und eine Steuerschaltung umfasst, welche ermittelt, ob eine Anhängerkupplungsbaugruppe ordnungsgemäß mit einem Anhänger verbunden ist.

Die WO 2006/029732 A1 zeigt eine Verstellvorrichtung für eine Sattelkupplung (5) mit einer Verschiebeinrichtung (21) mit zwei auf einem Fahrzeug, insbesondere auf einer Sattelzugmaschine (1) in dessen Längsrichtung angeordneten Führungsschienen mit einem auf den Führungsschienen (27) verschiebbaren Schlitten und mit einer Bestätigungseinrichtung zum Verschieben des Schlittens beschrieben, wobei die Betätigungseinrichtung beim Verschieben unter Beibehaltung des Formschlusses zwischen Führungsschienen (27) und Schlitten (26) ausgebildet ist.

Die CN 106114658 B zeigt einen Sattel für Sattelzugmaschinen mit Kupplungseinstellung umfassend einer Bodenplatte, einen Stützkörper, eine bewegliche Basis, eine Einstellvorrichtung und einen Sattelkörper.

Ausgehend hiervon machte es sich die vorliegende Erfindung zur Aufgabe, eine Sattelkupplung bereitzustellen, mit der auf möglichst unverfälschte Weise Rückschluss genommen werden kann auf einen Kraftfluss durch die Sattelkupplung und/oder eine Sattelkupplung bereitzustellen, durch die eine - zumindest indirekte - Erfassung der Kräfte und/oder Momente ermöglicht wird. Zudem ist es wünschenswert, bereits bestehende Sattelkupplungen möglichst einfach aufzurüsten, um den Kraftfluss in diesen Sattelkupplungen zu bestimmen.

Die Aufgabe wird gelöst mit einer Sattelkupplung gemäß Anspruch 1 sowie mit einem Verfahren gemäß Anspruch 14 oder 15. Weitere Vorteile und Merkmale der Erfindung ergeben sich aus den Unteransprüchen sowie der Beschreibung und den beigefügten Figuren.

Gemäß einem ersten Aspekt der vorliegenden Erfindung ist eine Sattelkupplung zum reversiblen Kuppeln eines Anhängers an eine Zugmaschine, vorgesehen, umfassend:
- eine Kupplungsplatte zur Aufnahme eines Zapfenelements des Anhängers und
- einen Lagerbock zur schwenkbaren Lagerung der Kupplungsplatte um eine Schwenkachse, insbesondere um eine horizontal verlaufende Schwenkachse,

wobei mindestens ein Abstandssensor vorgesehen ist, der bezogen auf eine Referenzfläche einen Abstand bestimmt, wobei über den Abstand und unter Berücksichtigung eines entsprechend gewählten Steifigkeitsmodells für den Lagerbock, ein Belastungszustand und/oder ein Verschleißzustand der Sattelkupplung bestimmt wird,
wobei der mindestens eine Abstandssensor und/oder die Referenzfläche Teil des Lagerbocks ist oder am Lagerbock angeordnet ist. Gegenüber den aus dem Stand der Technik bekannten Sattelkupplungen ist bei der erfindungsgemäßen Sattelkupplung mindestens ein Abstandssensor vorgesehen, mit dem bezogen auf eine Referenzfläche ein Abstand ermittelt werden kann, wobei der Abstandssensor bzw. die Referenzfläche Teil des Lagerbocks ist oder an diesem angebunden ist. Der bestimmte Abstand gibt dabei Aufschluss über Größe und/oder Form einer Verformung der Sattelkupplung unter einer bestimmten Belastung. Anhand des ermittelten Abstandes und unter Berücksichtigung eines entsprechend gewählten Steifigkeitsmodells für den Lagerbock ist es in vorteilhafter Weise möglich, Rückschlüsse zu ziehen auf den aktuellen Belastungszustand oder einen Verschleißzustand der Sattelkupplung, insbesondere des Lagerbocks. Mittels des aktuell erfassten Belastungszustandes ist es sodann beispielsweise möglich, in vorteilhafter Weise auf einen momentanen Fahrzustand des Sattelzugs rückzuschließen. Beispielsweise ist es möglich, auf eine Fahrbahnneigung, eine Beschleunigung, ein Kurvenradius und/oder eine Zuladung am Sattelzug rückzuschließen. Solche Informationen lassen sich vorteilhaft für das autonome Fahren eines Sattelzuges bzw. dessen Steuerung nutzen, beispielsweise um einen Energieverbrauch des Sattelzuges zu optimieren. Außerdem ist es vorstellbar, die erfassten Belastungszustände hinsichtlich ihrer Langzeitentwicklung zu untersuchen und anhand dieser Untersuchung Erkenntnisse zu gewinnen, die die Fahrsicherheit und Kontrolle des zulässigen Einsatzes der Sattelzüge verbessern. Dabei ist die Kupplungsplatte vorzugsweise schwenkbar um die Schwenkachse am Lagerbock, insbesondere an dessen Außenseite, angebunden. Durch die schwenkbare Lagerung der Kupplungsplatte am Lagerbock lässt sich die Kupplungsplatte um eine im Wesentlichen horizontal und quer zur Längsrichtung der Zugmaschine verlaufende Schwenkachse verlagern, wodurch eine Verkippung zwischen Anhänger und Zugmaschine möglich ist bzw. dieser Verkippung bzw. Nickbewegung innerhalb des Sattelzuges gefolgt werden kann. Solche Nickbewegungen treten insbesondere bei Bergauf- und/oder Bergabfahrten, beispielsweise an einer Rampe auf. Vorteilhafterweise ist die Schwenkachse jedoch in einem unveränderbaren Abstand zur Referenzfläche und/oder zum Schwerpunkt des Lagerbocks angeordnet. In anderen Worten kann dies bedeuten, dass die Schwenkachse relativ zur Referenzfläche oder zum Schwerpunkt des Lagerbocks oder den Schwerpunkten aller Lagerböcke unveränderbar, bis auf verschließbedingte Lageänderungen, ist. Hierdurch kann ein besonders mechanisch belastbares System erreicht werden. Ein wesentlicher Bestandteil des Lagerbocks ist dabei ein Lagerbockauge, das gegenüber der Montagefläche, an den der Lagerbock z. B. am Rahmen des Fahrzeugs festgelegt wird, beabstandet ist. An der Außenseite des Lagerbockauges ist die Kupplungsplatte über ein Lagereinsatz mittelbar angebunden. Vorzugsweise ist der Lagerbock starr ausgebildet. Unter einem starren Ausbilden ist dabei insbesondere zu verstehen, dass der Lagerbock keine z.B. Höhenverstellbarkeit, insbesondere durch ein automatisches System, aufweist. Vorzugsweise handelt es sich bei dem Anhänger um einen Sattelanhänger, dessen vorderer Bereich im gekoppelten Zustand oberhalb eines hinteren Abschnitts der Zugmaschine angeordnet ist, in dem die Sattelkupplung montiert ist. Insbesondere ist es vorgesehen, dass das Zapfenelement bzw. der Königszapfen in eine schlitzartige Öffnung der Kupplungsplatte einführbar ist und in dieser in einer finalen Stellung fixierbar ist, in der der Königszapfen bzw. das Zapfenelement um eine im Wesentlichen vertikal verlaufende Richtung schwenkbar gelagert ist, um bei Kurvenfahrten ein entsprechendes Abknicken zwischen Zugmaschine und Anhänger zu ermöglichen.

Vorzugsweise umfasst die Sattelkupplung mindestens drei Abstandssensoren. Mittels mindestens drei Abstandssensoren ist es in vorteilhafter Weise möglich, eine dreidimensionale Verformung des Lagerbocks zu erfassen, wodurch ein detailliertes Bild über den Belastungszustand, insbesondere hinsichtlich der verschiedenen Raumrichtungen erstellt werden kann. Dabei ist es vorstellbar, dass die Abstandssensoren jeweils einen vertikalen Abstand bzw. einen vertikal bemessenen Abstand erfassen. Alternativ ist es vorstellbar, dass die erfassten Abstände in schräg, insbesondere senkrecht, zueinander verlaufenden Richtung bemessen werden. Besonders bevorzugt ist es, wenn die drei Abstandssensoren zumindest den Abstand in zwei, vorteilhafterweise in drei, verschiedenen senkrecht zueinander stehenden Raumrichtungen bestimmen und/oder messen können. Daher kann z.B. ein Sensor einen vertikalen Abstand und zwei Sensoren einen horizontalen Abstand messen bzw. bestimmen. Hierdurch kann in besonders einfacher Weise eine zuverlässige Lastbestimmung erreicht werden.

In einer bevorzugten Ausführungsform ist es vorgesehen, dass die Sattelkupplung einen ersten Abstandssensor zur Erfassung eines Abstands in einer ersten Richtung und einen zweiten Abstandsensor zur Erfassung eines Abstands in einer zweiten Richtung umfasst, wobei die erste Richtung und die zweite Richtung nicht-parallel zueinander verlaufen. Dadurch lässt sich in vorteilhafter Weise mindestens in einer Schnittebene die Verformung des Lagerbocks erfassen oder abschätzen. Vorzugsweise verläuft diese vertikale Schnittebene parallel zur Längsrichtung der Zugmaschine oder parallel zur Montagefläche des Lagerbocks. Besonders bevorzugt ist es, um eine Unabhängigkeit der Messungen zu erhalten, wenn die erste und die zweite Richtung senkrecht aufeinander stehen.

Zweckmäßigerweise ist die Sattelkupplung mit einem dritten Abstandssensor zu Erfassung eines Abstandes in einer dritten Richtung ausgestattet, wobei die dritte Richtung nicht-parallel zu der ersten Richtung und/oder zweiten Richtung verläuft, insbesondere senkrecht jeweils zu der ersten und der zweiten Richtung. Beispielsweise ist es vorstellbar, dass ein Abstand zwischen zwei in Querrichtung des Sattelzugs einander gegenüberliegenden Lagerböcken mittels des dritten Abstandssensors erfasst wird. Anhand des Abstandes zwischen den beiden Lagerböcken ist es beispielsweise möglich, Rückschluss zu nehmen auf eventuelle Fahrbahnneigung und/oder Kurvenfahrten.

Vorzugsweise bestimmt der Abstandssensor berührungslos einen Abstand zu der Referenzfläche. Beispielsweise werden hierzu kapazitive und/oder induktive Abstandssensoren verwendet. Alternativ ist es vorstellbar, dass der Abstandssensor optisch, beispielsweise mittels Laserlicht, und/oder mittels Ultraschall einen Abstand ermittelt. Entsprechend ist bei der Anordnung des Abstandssensors darauf zu achten, dass der Abstandssensor auf eine entsprechende Referenzfläche ausgerichtet wird bzw. ist. Vorteilhafterweise interagiert der Abstandssensor daher mit einer Referenzfläche messtechnisch. Die Referenzfläche ist vorteilhafterweise elektrisch leitend ausgebildet. Hierdurch kann der Einsatz von kapazitiven und induktiven Sensoren erleichtert werden.

Vorzugsweise ist es vorgesehen, dass der mindestens eine Abstandssensor derart angeordnet ist, dass er einen Abstand zwischen einer Montagefläche, über die der Lagerbock im montierten Zustand z. B. am Fahrzeugrahmen festgelegt oder angebunden ist, und einer der Montagefläche zugewandten Unterseite des Lagerbocks bestimmt. In dieser Anordnung wird insbesondere das Absenken eines Lagerbockauges erfasst, wenn dieses aufgrund von auftretenden Belastungen zur Montagefläche hin verschoben wird. Die Integration eines derartigen Abstandssensors ist vergleichsweise einfach, da der Bereich zwischen Lagerbockauge und Montagefläche in der Regel keine weiteren Bauteile vorsieht und somit auch eine einfache Aufrüstung von bestehenden Sattelkupplung ermöglicht.

Vorzugsweise ist die Referenzfläche elektrisch leitend. Insbesondere ist die Referenzfläche aus einem Metall gefertigt. Dabei ist es vorstellbar, dass die Referenzfläche gezielt für eine optimale Abstandsmessung ausgelegt ist, beispielsweise nachträglich an den Lagerbock und/oder die Montagefläche angebunden wird, um eine optimale Bestimmung des Abstandes zu ermöglichen. Dabei wird insbesondere auf die verwendete Methodik bei der Bestimmung des Abstandes abgestellt und die Referenzfläche entsprechend ausgestaltet. Insbesondere ist es vorgesehen, dass die Referenzfläche mindestens abschnittsweise flach ausgebildet ist d. h. nicht gekrümmt ist.

Insbesondere umfasst die Sattelkupplung ein Dämpfungselement, insbesondere ein elastisches Dämpfungselement, wobei vorzugsweise der mindestens eine Abstandssensor oder die Referenzfläche am oder im Dämpfungselement und/oder an oder in einem Spannelement angeordnet ist. Insbesondere ist es vorgesehen, dass mittels des Spannelements die Kupplungsplatte an die Außenseite des Lagerbocks angebunden bzw. festgelegt wird, indem das beispielsweise riegelförmige Spannelement durch das Lagerbockauge durchgreift und an einander gegenüberliegenden Endstücken des Spannelements an die Kupplungsplatte angebunden ist, wodurch die Kupplungsplatte mit der Außenseite des Lagerbocks bzw. des Lagerbockauges verspannt wird. Durch die Bestimmung des Abstandes bezüglich des Dämpfungselements lässt sich mittels einer langfristigen Überwachung dieses Abstandes Rückschluss nehmen auf den Verschleißzustand des Dämpfungselements. Entsprechend ist es möglich, rechtzeitig das Dämpfungselement auszutauschen, wenn der Verschleißzustand einen vorbestimmten Schwellenwert überschreitet.

Insbesondere ist es vorgesehen, dass der mindestens eine Abstandssensor oder die Referenzfläche am oder in der Kupplungsplatte und/oder an oder in einem Lagereinsatz angeordnet ist. Bei der Anordnung im Lagereinsatz ist es in vorteilhafter Weise möglich, den Verschleißzustand des Lagereinsatzes zu erfassen, um gegebenenfalls bei Überschreiten eines Grenzwertes den Hinweis darauf zu erhalten, dass der Lagereinsatz ausgetauscht werden muss. Der Lagereinsatz ist zur mittelbaren gleitenden Anlagerung der Kupplungsplatte an die Außenseite des Lagerbocks, insbesondere des Lagerbockauges, vorgesehen. Mittels der Anordnung des Abstandssensors an der Kupplungsplatte lässt sich ebenfalls erfassen, inwiefern sich ein Abstand zwischen dem Lagerbock und der Kupplungsplatte verändert hat, was wiederum ein Anzeichen dafür ist, dass der Lagereinsatz beispielsweise durch Abrieb dünner geworden ist.

Vorzugsweise ist es vorgesehen, dass im montierten Zustand der mindestens eine Abstandssensor oder die Referenzfläche am oder im Fahrzeugrahmen der Zugmaschine und/oder an oder in einer Montagefläche des Fahrzeugs der Zugmaschine angeordnet ist. Entsprechend lässt sich auch durch die Anordnung des Abstandssensors bzw. der Referenzfläche in den Lagerbock umgebenden Bereichen der Zugmaschine ein Abstand bestimmen, der Aufschluss auf die Verformung des Lagerbocks gibt. Dabei ist der Lagerbock, insbesondere über die Montagefläche, an einem hinteren Abschnitt der Zugmaschine angebunden. Insbesondere ist es vorstellbar, möglichst flexibel die Anordnung des Abstandssensors an bauräumliche Voraussetzungen oder Gegebenheiten anzupassen.

Vorzugsweise ist es vorgesehen, dass der mindestens eine Abstandssensor oder die Referenzfläche in oder an einem Anschlussbereich des Lagerbocks, über den der Lagerbock an die Montagefläche im montierten Zustand angebunden ist, angeordnet ist. Beispielsweise lässt sich mit einem derart angeordneten Abstandssensor der Abstand zu der Unterseite der Kupplungsplatte erfassen. Vorzugsweise ist in Längsrichtung gesehen an beiden Anschlussbereichen jeweils ein Abstandssensor angeordnet, mit dem jeweils der Abstand zu der Kupplungsplatte in vertikaler Richtung erfasst wird. Dadurch ist es in vorteilhafter Weise möglich, zum Beispiel auf eine Verkippung der Kupplungsplatte rückzuschließen oder auf eine eventuelle Durchbiegung der Kupplungsplatte.

Vorzugsweise ist es vorgesehen, dass der mindestens eine Abstandssensor und die Referenzfläche an einer der Kupplungsplatte zugewandten Außenseite des Lagerbocks angeordnet sind. Insbesondere ist der Abstandssensor auf eine Referenzfläche im Bereich des Lagerauges ausgerichtet und die Abstandserfassung erfolgt schräg zu einer Ebene die parallel zur Montagefläche verläuft. Dadurch lässt sich beispielsweise eine Verformung des Lagerbocks, insbesondere im Bereich des Lagerbockauges, erfassen, die typischerweise erfolgt, wenn eine Beschleunigung bzw. ein Abbremsen im Sattelzug stattfindet.

Vorzugsweise ist es vorgesehen, dass die Sattelkupplung, insbesondere der Lagerbock, einen weiteren Sensor zur Erfassung einer Kraft aufweist. Beispielsweise handelt es sich um einen Kraftaufnehmer, der in den Lagerbock integriert ist und mit dem ein Kraftwert an einer bestimmten Stelle erfasst wird. Dabei handelt es sich bei dem weiteren Sensor gerade nicht um einen Abstandssensor, der ein Abstand bezogen auf eine Referenzfläche erfasst. Dadurch lässt sich ein noch vollständigeres Bild des Belastungszustandes mittels des weiteren Sensors abbilden. Insbesondere lässt sich der weitere Sensor für einen Redundanzmessung in Hinblick auf die Abstandssensoren verwenden.

Vorzugsweise ist der mindestens eine Abstandssensor in einer Halterung integriert. Besonders bevorzugt ist es vorgesehen, dass die mindestens drei Abstandssensoren in eine gemeinsame Halterung integriert sind und somit ein Sensorsystem bilden, mit dem mindestens drei verschiedene Abstände am Lagerbock erfasst werden. Insbesondere handelt es sich jeweils um einen Abstand zur jeweiligen Referenzfläche in der Umgebung des Lagerbocks. Besonders bevorzugt wird die Halterung nicht am Lagerbock selbst montiert, sondern der Lagerbock stellt lediglich die Referenzfläche bereit, während das Sensorsystem in der Umgebung des Lagerbocks angeordnet wird. Ferner erweist sich ein Sensorsystem, das in einer gemeinsamen Halterung integriert ist, besonders vorteilhaft beim Aufrüsten von Sattelkupplungen. Beispielsweise ist es vorstellbar, dass die gemeinsame Halterung mittels eines Magnets lösbar an einer beliebigen Stelle an der Montagefläche angebunden wird.

Erfindungsgemäß ist ein Verfahren zur Bestimmung eines Belastungszustands und/oder eines Verschleißzustands einer Sattelkupplung mittels mindestens eines Abstandssensors, wobei die Sattelkupplung
- eine Kupplungsplatte zur Aufnahme eines Zapfenelements des Anhängers und
- einen Lagerbock zur schwenkbaren Lagerung der Kupplungsplatte um eine Schwenkachse, insbesondere um eine horizontal verlaufende Schwenkachse, umfasst,

wobei mindestens ein Abstandssensor vorgesehen ist, der bezogen auf eine Referenzfläche einen Abstand bestimmt, wobei über den Abstand und unter Berücksichtigung eines entsprechend gewählten Steifigkeitsmodells für den Lagerbock, ein Belastungszustand und/oder ein Verschleißzustand der Sattelkupplung bestimmt wird,
wobei der mindestens eine Abstandssensor und/oder die Referenzfläche Teil des Lagerbocks oder am Lagerbock angeordnet ist. Alle für die Sattelkupplung beschriebenen Eigenschaften und Vorteile lassen sich analog auf das Verfahren zur Bestimmung des Belastungszustandes und/oder des Verschleißzustandes der Sattelkupplung übertragen und andersrum.

Insbesondere ist es vorgesehen, dass ein Steifigkeitsmodell des Lagerbocks angenommen wird, anhand dem mittels der bestimmten Abstände bzw. des ermittelten Abstands ein aktueller Belastungszustand ermittelt wird. Hierzu wird der jeweilige Abstandswert einer entsprechenden Rechnereinheit zugeführt und mittels der Rechnereinheit entsprechend ermittelt und besonders bevorzugt anschließend von der Rechnereinheit bereitgestellt. Beispielsweise wird der erfasste und von der Rechnereinheit bestimmte Belastungszustand einer Steuereinrichtung bereitgestellt, die anhand des Belastungszustands den aktuellen Fahrzustand des Sattelzugs ermittelt. Dabei ist es vorstellbar, dass die Steuereinrichtung weitere Information neben des Belastungszustandes der Sattelkupplung einbezieht, um den aktuellen Fahrzustand des Sattelzuges möglichst genau zu definieren. Darüber hinaus ist es denkbar, dass die ermittelten Belastungszustände bzw. der aktuell ermittelte Fahrtzustand zum autonomen Steuern des Sattelzuges oder zur Steuerung der Rekuperation herangezogen werden bzw. wird.

Erfindungsgemäß ist ein Verfahren zum Aufrüsten einer Sattelkupplung, wobei die Sattelkupplung
- eine Kupplungsplatte zur Aufnahme eines Zapfenelements des Anhängers und
- einen Lagerbock zur schwenkbaren Lagerung der Kupplungsplatte um eine Schwenkachse, insbesondere um eine horizontal verlaufende Schwenkachse umfasst, wobei mindestens ein Abstandssensor an der Sattelkupplung montiert wird, wobei der Abstandssensor bezogen auf eine Referenzfläche einen Abstand bestimmt , wobei über den Abstand und unter Berücksichtigung eines entsprechend gewählten Steifigkeitsmodells für den Lagerbock, ein Belastungszustand und/oder ein Verschleißzustand der Sattelkupplung bestimmt wird,
wobei der mindestens eine Abstandssensor und/oder die Referenzfläche Teil des Lagerbocks oder am Lagerbock angeordnet ist. Alle für die Sattelkupplung beschriebenen Eigenschaften und Vorteile lassen sich analog auf das Verfahren zum Aufrüsten der Sattelkupplung übertragen und andersrum. In anderen Worten kann das Verfahren zur Aufrüstung einer Sattelkupplung dazu dienen, eine wie vorgehend und nachfolgend beschriebene Sattelkupplung nach dem Aufrüsten zu erhalten.

Weitere Vorteile und Eigenschaften ergeben sich aus der nachfolgenden Beschreibung bevorzugter Ausführungsformen des erfindungsgemäßen Gegenstands mit Bezug auf die beigefügten Figuren. Es zeigt:
- **Fig. 1**: zeigt schematisch eine Sattelkupplung gemäß einer ersten beispielhaften Ausführungsform der vorliegenden Erfindung in einer Draufsicht
- **Fig. 2**: zeigt schematisch die Sattelkupplung aus Figur 1 in einer Schnittansicht
- **Fig. 3**: zeigt schematisch eine Sattelkupplung gemäß einer zweiten beispielhaften Ausführungsform der vorliegenden Erfindung in einer Schnittansicht
- **Fig. 4**: zeigt schematisch eine Sattelkupplung gemäß einer dritten beispielhaften Ausführungsform der vorliegenden Erfindung in einer Schnittansicht
- **Fig. 5**: zeigt schematisch eine Sattelkupplung gemäß einer vierten beispielhaften Ausführungsform der vorliegenden Erfindung in einer Schnittansicht und
- **Fig. 6**: zeigt schematisch eine Sattelkupplung gemäß einer fünften beispielhaften Ausführungsform der vorliegenden Erfindung in einer Schnittansicht

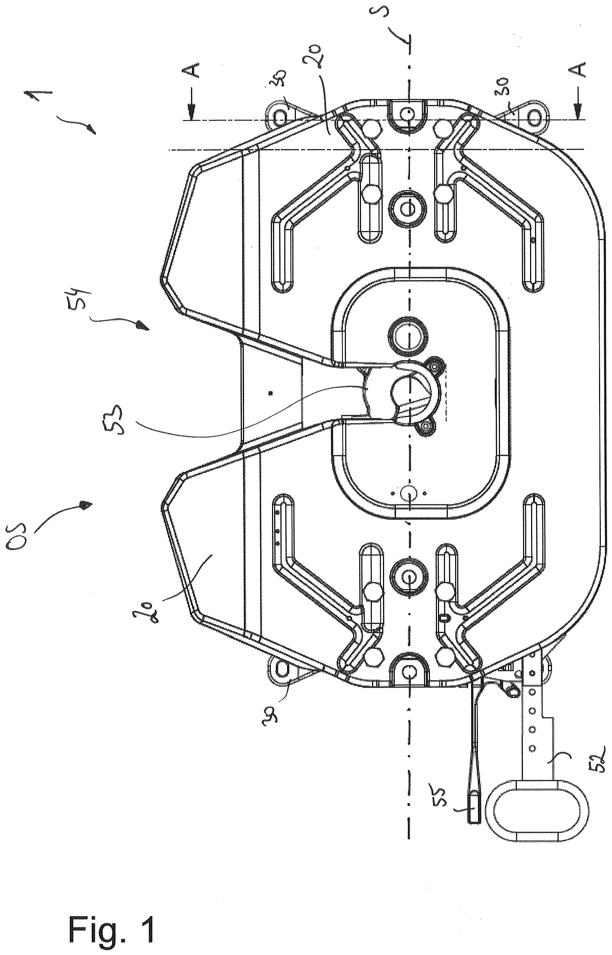

In **Figur 1** ist schematisch eine Sattelkupplung 1 gemäß einer ersten beispielhaften Ausführungsform der vorliegenden Erfindung dargestellt. Insbesondere dient eine derartige Sattelkupplung 1 dem reversiblen, d. h. lösbaren Kuppeln, eines Anhängers (nicht dargestellt), insbesondere eines Sattelanhängers, an eine Zugmaschine (nicht dargestellt) zur Ausbildung eines Sattelzugs. In der in Figur 1 dargestellten Ansicht ist einer Draufsicht (von oben) auf die Sattelkupplung 1 illustriert. Dabei umfasst die Sattelkupplung 1 eine Kupplungsplatte 20 zur Aufnahme eines Zapfenelements bzw. eines Königszapfens des Anhängers. Die Sattelkupplung 1 ist vorzugsweise in einem hinteren Abschnitt eine Zugmaschine an einer entsprechenden Montageplatte bzw. Montagefläche 25 angebunden und gestattet die Anbindung eines Anhängers bzw. Sattelanhängers über dessen Zapfenelement bzw. Königszapfen. Zum Anbinden wird der Königszapfen über einen Einführbereich 54 an einer offenen Seite OS der Kupplungsplatte 20 eingeführt. Der trichterförmige Einführbereich 54 führt den Königszapfen in seine finale Stellung, in der er mit einem Schlossstück 53 fixierbar ist. Ein derartiges Schlossstück 53 ist vorzugsweise vorgespannt mittels einer Feder, sodass der Königszapfen in seiner finalen Stellung den durch das Schlossstück 53 begrenzten Abschnitt am Ende des Einführbereichs 54 nicht mehr verlassen kann. Mittels eines Entriegelungsgriffs 52 lässt sich dabei das Schlossstück 53 derart verschwenken bzw. rotieren, dass der Weg für den Königszapfens zum offenen Ende des Eingangsbereich 54 freigegeben werden kann und der Königszapfens die fixierte Stellung schließlich bei Bedarf wieder verlassen kann. Ferner ist eine Verschlusssicherung 55 vorgesehen, mit der sichergestellt werden kann, dass der Entriegelungsgriff 52 nicht versehentlich geöffnet wird bzw. betätigt wird. In seiner fixierten Stellung ist der Königszapfen dabei um eine im Wesentlichen vertikal verlaufende Richtung schwenkbar gelagert, sodass Anhänger und Zugmaschine bei einer Kurvenfahrt zueinander gewinkelt ausgerichtet werden können.

Um bei einer Bergauf- bzw. Bergabfahrt eine abgewinkelte Ausrichtung, d. h. eine Nickbewegung, zwischen Zugmaschine und Anhänger bezüglich eines Fahrbahnverlaufs zu gestatten, ist es vorgesehen, dass die Kupplungsplatte 20 schwenkbar um eine Schwenkachse S, insbesondere eine im Wesentlichen horizontal und quer zur Längsrichtung der Zugmaschine verlaufende Schwenkachse S, gelagert ist. Zur schwenkbaren Lagerung der Kupplungsplatte 20 ist die Kupplungsplatte 20 mittelbar an mindestens einem Lagerbock 30, vorzugsweise an zwei in Querrichtung der Zugmaschine einander gegenüberliegenden Lagerböcken 30, angebunden.

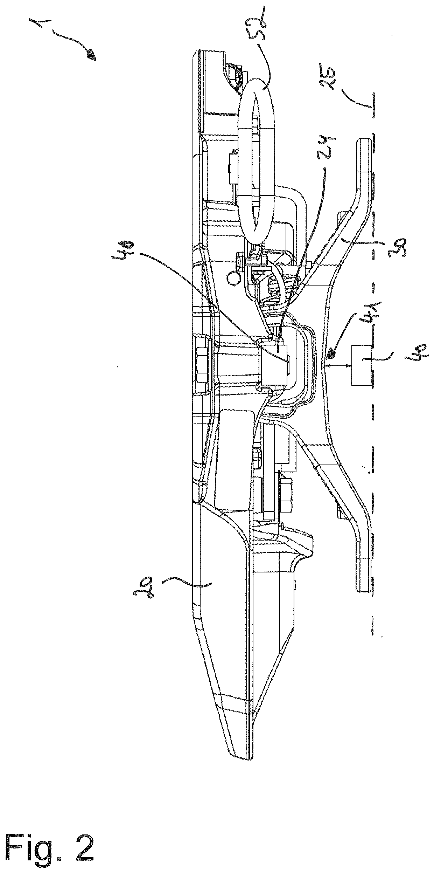

In **Figur 2** ist die Sattelkupplung 1 aus Figur 1 in einer Schnittansicht entlang der A-A-Line aus Figur 1 illustriert. In dem dargestellten Ausführungsbeispiel ist der Lagerbock 30 bügelartig ausgeformt, wobei schenkelartige Elemente des Lagerblocks 30 Anschlussbereich 45 aufweisen, über die der Lagerbock 30 an eine Montagefläche 25 der Zugmaschine montierbar ist. In Längsrichtung der Zugmaschine gesehen weist der Lagerblock 30 zwischen den Anschlussflächen 45 des Lagerbocks 30 ein gegenüber der Montagefläche 25 in vertikaler Richtung gesehen beabstandetes Lagerbockauge 35 auf. Zur schwenkbaren Lagerung der Kupplungsplatte 20 ist die Kupplungsplatte 20 mittelbar über ein Lagereinsatz 21 an einer Außenseite des Lagerbocks 30 gleitend gelagert. D. h. bei einer Schwenkbewegung der Kupplungsplatte 20 um die Schwenkachse S wird die Kupplungsplatte 20 mit dem Lagereinsatz 21 an der Außenseite des Lagerbocks 30, insbesondere entlang der Außenseite des Lagerbockauges 35, gleitend mitgeführt und dadurch verschwenkt. Beispielsweise ist die Kupplungsplatte 20 dabei mittels eines Spannelements 24, insbesondere in Form eines Riegels, das durch das Lagerbockauge 35 hindurchgreift, an die Außenseite des Lagerbockauges 35 angebunden. Dabei ist vorzugsweise im Lagerbockauge 35 zwischen dem Spannelement 24 und einer Innenseite des Lagerbockauges 35 ein Dämpfungselement 28, beispielsweise in Form eines Gummieinsatzes, vorgesehen.

In dem in **Figur 2** dargestellten Ausführungsbeispiel umfasst die Sattelkupplung 1 ferner mindestens einen Abstandssensor 40, der beispielsweise an der Montagefläche 25 angeordnet ist und einen Abstand bezüglich einer Referenzfläche 41 bestimmt, wobei die Referenzfläche 41 Teil des Lagerbocks 30 ist. In dem in Figur 2 dargestellten Ausführungsbeispiel ist der Abstandsensor 40 bzw. der gemessene Abstand zwischen Montagefläche 25 und der der Montagefläche 25 zugewandten Außenseite des Lagerbocks 30 mittig zwischen den Anschlussbereichen 45 des Lagerbocks 30 ausgebildet. Alternativ ist es vorstellbar, dass der Abstandsensor 40 in Längsrichtung der Zugmaschine gesehen gegenüber einer mittigen Ausrichtung nach vorne oder nach hinten versetzt angeordnet ist. Insbesondere misst der Abstandsensor 40 in Figur 2 einen Abstand in einer senkrecht zur Montagefläche 25 verlaufenden Richtung. Es hat sich herausgestellt, dass mittels einer Abstandsmessung Rückschluss genommen werden kann auf eine Verformung, insbesondere elastische Verformung, des Lagerbocks 30, die wiederum dazu herangezogen werden kann, den aktuellen Belastungszustand der Sattelkupplung 1 zu ermitteln. Vorzugsweise umfasst die Sattelkupplung 1 dazu mindestens drei Abstandssensoren, die beispielsweise jeweils einer Raumrichtung zugeordnet sind, sodass Rückschluss genommen werden kann auf eine dreidimensionale Verformung der Sattelkupplung. Insbesondere wird zur Bestimmung der Belastung ein Steifigkeitsmodell der Sattelkupplung 1 angenommen, anhand dem zusammen mit der bestimmten Verformung der Sattelkupplung Rückschluss genommen werden kann auf die Belastung der Sattelkupplung bzw. den aktuellen Belastungszustand der Sattelkupplung. Beispielsweise handelt es sich bei dem Abstandssensor 40 um ein induktiven und/oder kapazitiven Abstandssensor 40. Alternativ ist es vorstellbar, dass der Abstandssensor 40 ein optischer Sensor, der beispielsweise mittels Laserlicht einen Abstand misst, oder ein Ultraschallsensor ist. Vorzugsweise handelt es sich bei dem Abstandssensor 40 um einen Sensor, der berührungslos den Abstand bestimmt.

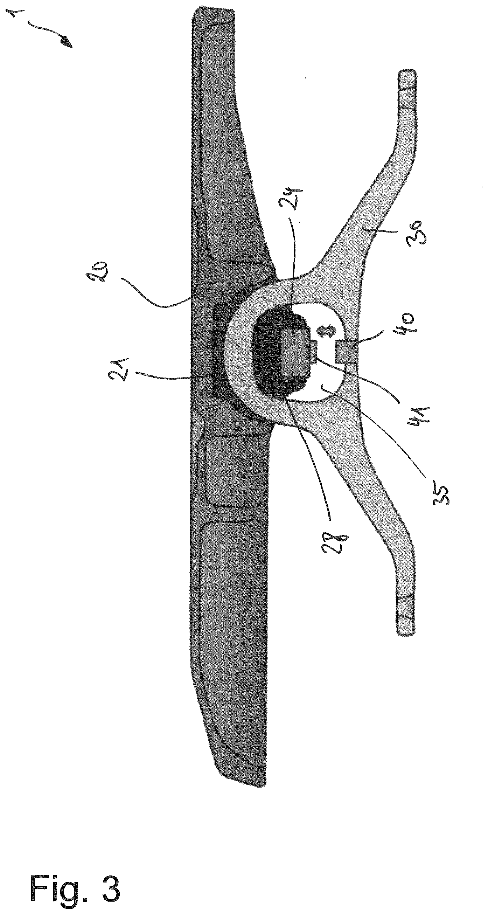

In **Figur 3** ist in einer Schnittansicht eine Sattelkupplung 1 gemäß einer zweiten bevorzugten Ausführungsform der vorliegenden Erfindung dargestellt. Dabei ist es insbesondere vorgesehen, dass der Abstandssensor 40 im Lagerbockauge 35 angeordnet ist, insbesondere derart, dass in einer im Wesentlichen vertikalen Richtung ein Abstand zwischen dem Abstandssensor 40 an der Innenseite des Lagerbockauges 35 zum Spannelement 24 bestimmt wird. Entsprechend ist an einer dem Abstandssensor 40 zugewandten Seite des Spannelements 24 eine Referenzfläche 41 ausgebildet. Durch eine langfristige Überwachung des Abstandes zwischen der Innenseite des Lagerbockauges 35 und dem Spannelement 24 ist es in vorteilhafter Weise möglich, Rückschlüsse zu ziehen auf einen Verschleißzustand des Dämpfungselements 28. Im Gegensatz zu der Bestimmung des Abstandes zwischen der Montagefläche und einer der Montagefläche zugewandten Außenseite des Lagerbocks 30, die dem Erfassen der aktuellen Belastung dient, ist es in der Ausführungsform des Figur 3 vorgesehen, eine langfristige Zustandsüberwachung mittels des mindestens einen Abstandssensor 40 zu realisieren.

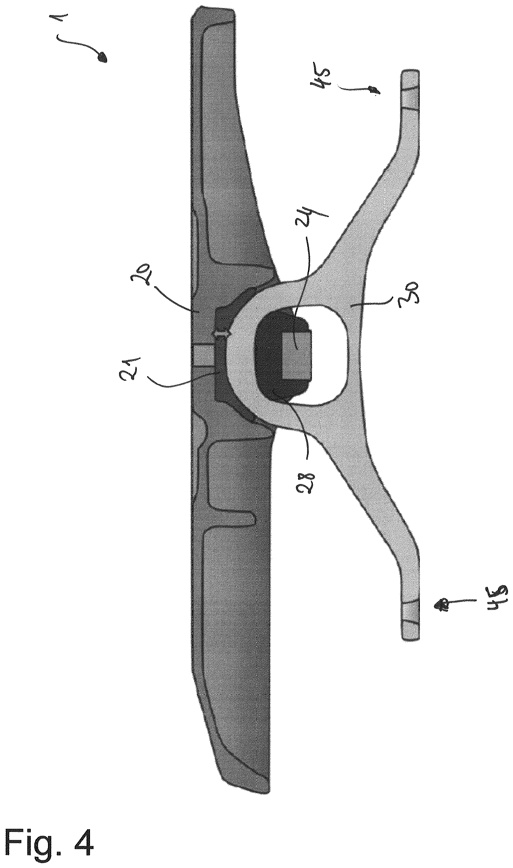

In **Figur 4** ist in einer Schnittansicht eine Sattelkupplung 1 gemäß einer dritten bevorzugten Ausführungsform der vorliegenden Erfindung dargestellt. In diesem Ausführungsbeispiel ist es vorgesehen, dass der mindestens eine Abstandssensor 40 derart angeordnet ist, dass ein Abstand zwischen dem Lagerbock 30 und einer dem Lagerbock 30 zugewandten Seite der Kupplungsplatte 20 bestimmt wird. Hierzu ist die Referenzfläche 41 und/oder der Abstandssensor 40 an einer Unterseite der Kupplungsplatte 20 angeordnet. Insbesondere ist es vorgesehen, dass ein im Wesentlichen vertikal verlaufender Abstand zwischen Kupplungsplatte 20 und Lagerbock 30, insbesondere Lagerbockauge 35, bestimmt wird. Dadurch lässt sich in vorteilhafter Weise auf ein Verschleiß des Lagereinsatzes 21 schließen, der zwischen Kupplungsplatte 20 und Außenseite des Lagerbocks 30 angeordnet ist. Entsprechend sieht das Ausführungsbeispiel der Figur 4 ebenfalls eine langfristige Überwachung des Abstandes vor, um in entsprechender Weise auf einen potentiellen Verschleiß Rückschluss zu nehmen.

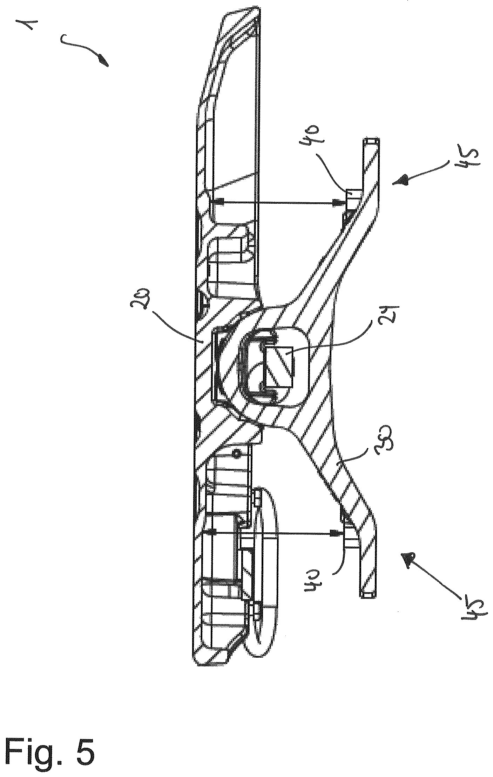

In **Figur 5** ist eine Schnittansicht durch eine Sattelkupplung 1 gemäß einer vierten bevorzugten Ausführungsform der vorliegenden Erfindung dargestellt. In dieser Ausführungsform ist es vorgesehen, dass der mindestens eine Abstandssensor 40 am Lagerbock 30, insbesondere im Anschlussbereich 45 des Lagerbocks 30, angeordnet ist und ein im Wesentlichen in vertikaler Richtung bemessenen Abstand zu einer Unterseite der Kupplungsplatte 20 bemisst. Insbesondere ist es vorgesehen, dass in jedem der zwei Anschlussbereich 45 jeweils ein Abstandssensor 40 angeordnet ist, mit dem jeweils der Abstand in vertikaler Richtung zur Unterseite der Kupplungsplatte 20 bemessen wird. Dadurch ist es in vorteilhafter Weise möglich, anhand der von den beiden Abstandssensoren 40 erfassten Abstände Rückschluss zu ziehen auf eine eventuelle Durchbiegung der Kupplungsplatte 20 bzw. auf ein aktuellen Neigungswinkel der Kupplungsplatte 20, der wiederum Aufschluss gibt auf die aktuelle Ausrichtung zwischen Zugmaschine und Anhänger, insbesondere bezogen auf die Fahrbahn der Zugmaschine.

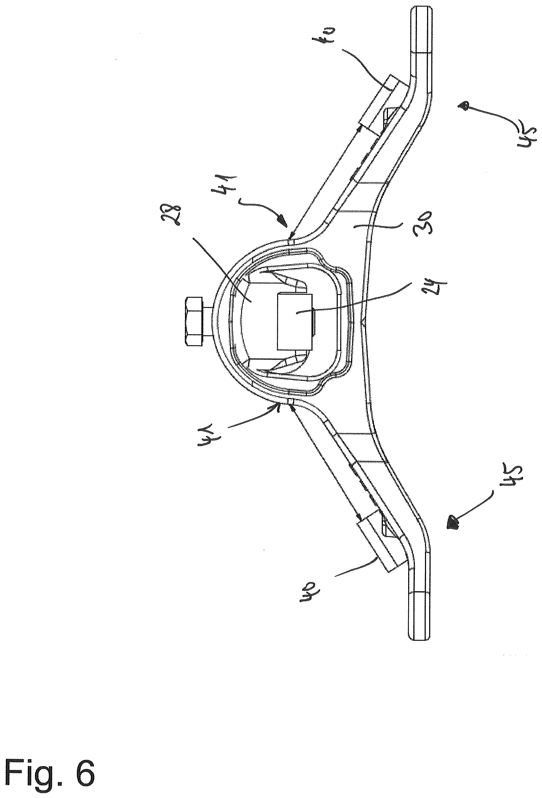

In **Figur 6** ist in einer Schnittansicht ein Lagerbock 30 für eine Sattelkupplung 1 gemäß einer fünften bevorzugten Ausführungsform der vorliegenden Erfindung dargestellt. Im Gegensatz zu den Ausführungsbeispielen aus den Figuren 1 bis 5 ist es hier vorgesehen, dass der Abstand nicht in vertikaler Richtung bemessen wird sondern im Wesentlichen schräg gegenüber der Montagefläche 25. Insbesondere ist es vorgesehen, dass der Abstandssensor 40 im Anschlussbereich 45 angeordnet ist und die Referenzfläche 41 im Bereich des Lagerbockauges 35, insbesondere an dessen Außenseite. Dadurch lässt sich ebenfalls Aufschluss gewinnen bzw. Rückschluss nehmen auf den aktuellen Verformungsgrad des Lagerbocks 30.

### Bezugszeichen:

- 1: Sattelkupplung
- 20: Kupplungsplatte
- 21: Lagereinsatz
- 24: Spannelement
- 25: Montagefläche
- 28: Dämpfungselement
- 30: Lagerbock
- 35: Lagerbockauge
- 40: Abstandssensor
- 41: Referenzfläche
- 45: Anschlussbereich
- 52: Entriegelungsgriff
- 53: Schlossstück
- 54: Einführbereich
- 55: Verschlusssicherung
- S: Schwenkachse
- OS: offene Seite

## Patentansprüche

1. Sattelkupplung (1) zum reversiblen Kuppeln eines Anhängers an eine Zugmaschine, umfassend:
- eine Kupplungsplatte (20) zur Aufnahme eines Zapfenelements des Anhängers und
- einen Lagerbock (30) zur schwenkbaren Lagerung der Kupplungsplatte (20) um eine Schwenkachse (S), insbesondere um eine horizontal verlaufende Schwenkachse (S),
**dadurch gekennzeichnet, dass** mindestens ein Abstandssensor (40) vorgesehen ist, der bezogen auf eine Referenzfläche (41) einen Abstand bestimmt,
wobei über den Abstand und unter Berücksichtigung eines entsprechend gewählten Steifigkeitsmodells für den Lagerbock, ein Belastungszustand und/oder ein Verschleißzustand der Sattelkupplung bestimmt wird,
wobei der mindestens eine Abstandssensor (40) und/oder die Referenzfläche (41) Teil des Lagerbocks (30) ist oder am Lagerbock (30) angeordnet ist.

2. Sattelkupplung (1) gemäß Anspruch 1, wobei die Sattelkupplung (1) mindestens drei Abstandssensoren (40) umfasst.

3. Sattelkupplung (1) gemäß einem der vorhergehenden Ansprüche,
wobei die Sattelkupplung (1) einen erster Abstandssensor zur Erfassung eines Abstands in einer ersten Richtung und einen zweiten Abstandssensor zur Erfassung eines Abstands in einer zweiten Richtung umfasst,
wobei die erste Richtung und die zweite Richtung nicht-parallel zueinander verlaufen.

4. Sattelkupplung (1) gemäß einem der vorhergehenden Ansprüche, wobei der Abstandssensor (40) berührungslos einen Abstand zu der Referenzfläche (41), beispielsweise mit einem kapazitiven und/oder induktiven Abstandssensor (40), bestimmt.

5. Sattelkupplung (1) gemäß einem der vorhergehenden Ansprüche, wobei der mindestens eine Abstandssensor (40) derart angeordnet ist, dass er einen Abstand zwischen seiner Montagefläche (25) und einer der Montagefläche (25) zugewandten Unterseite des Lagerbocks (30) bestimmt.

6. Sattelkupplung (1) gemäß einem der vorhergehenden Ansprüche, wobei die Referenzfläche (41) elektrisch leitend ist, vorzugsweise aus einem Metall ist.

7. Sattelkupplung (1) gemäß einem der vorhergehenden Ansprüche, welche ein Dämpfungselement (28), insbesondere ein elastisches Dämpfungselement (28), umfasst, wobei vorzugsweise der mindestens eine Abstandssensor (40) oder die Referenzfläche (41)
- am oder im Dämpfungselement (28) und/oder
- an oder in einem Spannelement (24)
angeordnet ist.

8. Sattelkupplung (1) gemäß einem der vorhergehenden Ansprüche, wobei der mindestens eine Abstandssensor (40) oder die Referenzfläche (41)
- am oder in der Kupplungsplatte (20) und/oder
- an oder in einem Lagereinsatz (21)
angeordnet ist.

9. Sattelkupplung (1) gemäß einem der vorhergehenden Ansprüche, wobei im montierten Zustand der mindestens eine Abstandssensor (40) oder die Referenzfläche (41)
- am oder im Fahrzeugrahmen der Zugmaschine oder
- an oder in einer Montagefläche (25) der Zugmaschine
angeordnet ist.

10. Sattelkupplung (1) gemäß einem der vorhergehenden Ansprüche, wobei der mindestens eine Abstandssensor (40) oder die Referenzfläche (41) in oder an einem Anschlussbereich (45) des Lagerbocks (30), über den der Lagerbock (30) an die Montagefläche des Fahrzeugs im montierten Zustand angebunden ist, angeordnet ist.

11. Sattelkupplung (1) gemäß einem der vorhergehenden Ansprüche, wobei der mindestens eine Abstandsensor (40) und die Referenzfläche (41) an einer der Kupplungsplatte (20) zugewandten Außenseite des Lagerbocks (30) angeordnet sind.

12. Sattelkupplung (1) gemäß einem der vorhergehenden Ansprüche, wobei die Sattelkupplung (1), vorzugsweise der Lagerbock (30), einen weiteren Sensor zur Erfassung einer Kraft aufweist.

13. Sattelkupplung (1) gemäß einem der vorhergehenden Ansprüche, wobei der mindestens eine Abstandssensor (40) in eine Halterung integriert ist.

14. Verfahren zur Bestimmung eines Belastungszustands und/oder eines Verschleißzustands einer Sattelkupplung (1), insbesondere unter Verwendung einer Sattelkupplung (1) gemäß einem der Ansprüche 1 bis 12, mittels mindestens eines Abstandssensors (40),
wobei die Sattelkupplung (1)
- eine Kupplungsplatte (20) zur Aufnahme eines Zapfenelements des Anhängers und
- einen Lagerbock (30) zur schwenkbaren Lagerung der Kupplungsplatte (20) um eine Schwenkachse (S), insbesondere um eine horizontal verlaufende Schwenkachse (S)
umfasst,
wobei mindestens ein Abstandssensor (40) vorgesehen ist, der bezogen auf eine Referenzfläche (41) einen Abstand bestimmt,
wobei über den Abstand und unter Berücksichtigung eines entsprechend gewählten Steifigkeitsmodells für den Lagerbock, ein Belastungszustand und/oder ein Verschleißzustand der Sattelkupplung bestimmt wird, wobei der mindestens eine Abstandssensor (40) und/oder die Referenzfläche (41) Teil des Lagerbocks (30) oder am Lagerbock (30) angeordnet ist.

15. Verfahren zum Aufrüsten einer Sattelkupplung (1),
wobei die Sattelkupplung (1)
- eine Kupplungsplatte (20) zur Aufnahme eines Zapfenelements des Anhängers und
- einen Lagerbock (30) zur schwenkbaren Lagerung der Kupplungsplatte (20) um eine Schwenkachse (S), insbesondere um eine horizontal verlaufende Schwenkachse (S)
umfasst,
wobei mindestens ein Abstandssensor (40) an der Sattelkupplung montiert wird, wobei der Abstandssensor (40) bezogen auf eine Referenzfläche (41) einen Abstand bestimmt,
wobei über den Abstand und unter Berücksichtigung eines entsprechend gewählten Steifigkeitsmodells für den Lagerbock, ein Belastungszustand und/oder ein Verschleißzustand der Sattelkupplung bestimmt wird,
wobei der mindestens eine Abstandssensor (40) und/oder die Referenzfläche (41) Teil des Lagerbocks (30) oder am Lagerbock (30) angeordnet ist.

## Claims

1. Fifth wheel coupling (1) for reversible coupling of a trailer to a tractor, comprising:
- a coupling plate (20) for receiving a pin element of the trailer and
- a bearing block (30) for pivotably mounting the coupling plate (20) about a pivot axis (S), in particular about a horizontally extending pivot axis (S), **characterized in that** at least one distance sensor (40) is provided, which determines a distance in relation to a reference surface (41),
wherein a load condition and/or a wear condition of the fifth wheel coupling is determined via the distance and taking into account a correspondingly selected stiffness model for the bearing block,
wherein the at least one distance sensor (40) and/or the reference surface (41) is part of the bearing block (30) or is arranged on the bearing block (30).

2. Fifth wheel coupling (1) according to claim 1, wherein the fifth wheel coupling (1) comprises at least three distance sensors (40).

3. Fifth wheel coupling (1) according to one of the preceding claims,
wherein the fifth wheel coupling (1) comprises a first distance sensor for detecting a distance in a first direction and a second distance sensor for detecting a distance in a second direction,
wherein the first direction and the second direction are not parallel to each other.

4. Fifth wheel coupling (1) according to one of the preceding claims, wherein the distance sensor (40) determines a distance to the reference surface (41) without contact, for example with a capacitive and/or inductive distance sensor (40).

5. Fifth wheel coupling (1) according to one of the preceding claims, wherein the at least one distance sensor (40) is arranged such that it determines a distance between its mounting surface (25) and an underside of the bearing block (30) facing the mounting surface (25).

6. Fifth wheel coupling (1) according to one of the preceding claims, wherein the reference surface (41) is electrically conductive, preferably made of a metal.

7. Fifth wheel coupling (1) according to one of the preceding claims, which comprises a damping element (28), in particular a resilient damping element (28), wherein preferably the at least one distance sensor (40) or the reference surface (41) is arranged
- on or in the damping element (28) and/or
- on or in a tensioning element (24).

8. Fifth wheel coupling (1) according to one of the preceding claims, wherein the at least one distance sensor (40) or the reference surface (41) is arranged
- on or in the coupling plate (20) and/or
- on or in a bearing insert (21).

9. Fifth wheel coupling (1) according to one of the preceding claims, wherein in the mounted state the at least one distance sensor (40) or the reference surface (41) is arranged
- on or in the vehicle frame of the tractor or
- on or in a mounting surface (25) of the tractor.

10. Fifth wheel coupling (1) according to one of the preceding claims, wherein the at least one distance sensor (40) or the reference surface (41) is arranged in or on a connection region (45) of the bearing block (30), via which the bearing block (30) is connected to the mounting surface of the vehicle in the mounted state.

11. Fifth wheel coupling (1) according to one of the preceding claims, wherein the at least one distance sensor (40) and the reference surface (41) are arranged on an outer side of the bearing block (30) facing the coupling plate (20).

12. Fifth wheel coupling (1) according to one of the preceding claims, wherein the fifth wheel coupling (1), preferably the bearing block (30), has a further sensor for detecting a force.

13. Fifth wheel coupling (1) according to one of the preceding claims, wherein the at least one distance sensor (40) is integrated in a holder.

14. Method for determining a load condition and/or a wear condition of a fifth wheel coupling (1), in particular using a fifth wheel coupling (1) according to any one of claims 1 to 12, by means of at least one distance sensor (40),
wherein the fifth wheel coupling (1) comprises
- a coupling plate (20) for receiving a pin element of the trailer and
- a bearing block (30) for pivotably mounting the coupling plate (20) about a pivot axis (S), in particular about a horizontally extending pivot axis (S),
wherein at least one distance sensor (40) is provided which determines a distance relative to a reference surface (41),
wherein a load condition and/or a wear condition of the fifth wheel coupling is determined via the distance and taking into account a correspondingly selected stiffness model for the bearing block, wherein the at least one distance sensor (40) and/or the reference surface (41) is arranged as part of the bearing block (30) or on the bearing block (30).

15. Method for upgrading a fifth wheel coupling (1),
wherein the fifth wheel coupling (1) comprises
- a coupling plate (20) for receiving a pin element of the trailer and
- a bearing block (30) for pivotably mounting the coupling plate (20) about a pivot axis (S), in particular about a horizontally extending pivot axis (S),
wherein at least one distance sensor (40) is mounted on the fifth wheel coupling, wherein the distance sensor (40) determines a distance relative to a reference surface (41),
wherein a load condition and/or a wear condition of the fifth wheel coupling is determined via the distance and taking into account a correspondingly selected stiffness model for the bearing block,
wherein the at least one distance sensor (40) and/or the reference surface (41) is arranged as part of the bearing block (30) or on the bearing block (30).

## Revendications

1. Sellette d'attelage (1) pour l'attelage réversible d'une remorque à un véhicule tracteur, comprenant :
- une plaque d'accouplement (20) destinée à recevoir un élément de pivot de la remorque, et
- un support de palier (30) pour le montage pivotant de la plaque d'accouplement (20) autour d'un axe de pivotement (S), en particulier autour d'un axe de pivotement (S) s'étendant horizontalement,
**caractérisée en ce que**
il est prévu au moins un capteur de distance (40) qui détermine une distance par rapport à une surface de référence (41),
un état de charge et/ou un état d'usure de la sellette d'attelage est déterminé par la distance et en tenant compte d'un modèle de rigidité choisi en conséquence pour le support de palier,
ledit au moins un capteur de distance (40) et/ou la surface de référence (41) fait partie du support de palier (30) ou est disposé(e) sur le support de palier (30).

2. Sellette d'attelage (1) selon la revendication 1,
dans laquelle la sellette d'attelage (1) comprend au moins trois capteurs de distance (40).

3. Sellette d'attelage (1) selon l'une des revendications précédentes,
dans laquelle la sellette d'attelage (1) comprend un premier capteur de distance pour détecter une distance dans une première direction et un deuxième capteur de distance pour détecter une distance dans une deuxième direction,
la première direction et la deuxième direction étant non parallèles entre elles.

4. Sellette d'attelage (1) selon l'une des revendications précédentes,
dans laquelle le capteur de distance (40) détermine sans contact physique une distance par rapport à la surface de référence (41), par exemple avec un capteur de distance capacitif et/ou inductif (40).

5. Sellette d'attelage (1) selon l'une des revendications précédentes,
dans laquelle ledit au moins un capteur de distance (40) est disposé de manière à déterminer une distance entre sa surface de montage (25) et une face inférieure du support de palier (30) tournée vers la surface de montage (25).

6. Sellette d'attelage (1) selon l'une des revendications précédentes,
dans laquelle la surface de référence (31) est électriquement conductrice, de préférence en un métal.

7. Sellette d'attelage (1) selon l'une des revendications précédentes,
comprenant un élément d'amortissement (28), en particulier un élément d'amortissement élastique (28),
dans laquelle, de préférence, ledit au moins un capteur de distance (40) ou la surface de référence (41) est disposé(e)
- sur ou dans l'élément d'amortissement (28) et/ou
- sur ou dans un élément de serrage (24).

8. Sellette d'attelage (1) selon l'une des revendications précédentes,
dans laquelle ledit au moins un capteur de distance (40) ou la surface de référence (41) est disposé(e)
- sur ou dans la plaque d'accouplement (20) et/ou
- sur ou dans un insert de palier (21).

9. Sellette d'attelage (1) selon l'une des revendications précédentes,
dans laquelle, à l'état monté, ledit au moins un capteur de distance (40) ou la surface de référence (41) est disposé(e)
- sur ou dans le châssis du véhicule tracteur ou
- sur ou dans une surface de montage (25) du véhicule tracteur.

10. Sellette d'attelage (1) selon l'une des revendications précédentes,
dans laquelle ledit au moins un capteur de distance (40) ou la surface de référence (41) est disposé(e) dans ou sur une zone de raccordement (45) du support de palier (30) par laquelle le support de palier (30) est relié à la surface de montage du véhicule, à l'état monté.

11. Sellette d'attelage (1) selon l'une des revendications précédentes,
dans laquelle ledit au moins un capteur de distance (40) et la surface de référence (41) sont disposés sur une face extérieure du support de palier (30) tournée vers la plaque d'accouplement (20).

12. Sellette d'attelage (1) selon l'une des revendications précédentes,
dans laquelle la sellette d'attelage (1), de préférence le support de palier (30), comporte un autre capteur destiné à détecter une force.

13. Sellette d'attelage (1) selon l'une des revendications précédentes,
dans laquelle ledit au moins un capteur de distance (40) est intégré dans un dispositif de retenue.

14. Procédé de détermination d'un état de charge et/ou d'un état d'usure d'une sellette d'attelage (1), en particulier en utilisant une sellette d'attelage (1) selon l'une des revendications 1 à 12, au moyen d'au moins un capteur de distance (40),
la sellette d'attelage (1) comprenant
- une plaque d'accouplement (20) destinée à recevoir un élément de pivot de la remorque et
- un support de palier (30) pour le montage pivotant de la plaque d'accouplement (20) autour d'un axe de pivotement (S), en particulier autour d'un axe de pivotement (S) s'étendant horizontalement,
dans lequel
il est prévu au moins un capteur de distance (40) qui détermine une distance par rapport à une surface de référence (41),
un état de charge et/ou un état d'usure de la sellette d'attelage est déterminé par la distance et en tenant compte d'un modèle de rigidité choisi en conséquence pour le support de palier,
ledit au moins un capteur de distance (40) et/ou la surface de référence (41) fait partie du support de palier (30) ou est disposé(e) sur le support de palier (30).

15. Procédé d'amélioration d'une sellette d'attelage (1),
la sellette d'attelage (1) comprenant
- une plaque d'accouplement (20) destinée à recevoir un élément de pivot de la remorque et
- un support de palier (30) pour le montage pivotant de la plaque d'accouplement (20) autour d'un axe de pivotement (S), en particulier autour d'un axe de pivotement (S) s'étendant horizontalement,
dans lequel
au moins un capteur de distance (40) est monté sur la sellette d'attelage, le capteur de distance (40) déterminant une distance par rapport à une surface de référence (41),
un état de charge et/ou un état d'usure de la sellette d'attelage est déterminé par la distance et en tenant compte d'un modèle de rigidité choisi en conséquence pour le support de palier,
ledit au moins un capteur de distance (40) et/ou la surface de référence (41) fait partie du support de palier (30) ou est disposé(e) sur le support de palier (30).
